# EUROPEAN PATENT APPLICATION

(11) **EP 3 825 075 A1**
(43) Date of publication of application: **26.05.2021**
(21) Application number: 19838919.9
(22) Date of filing: 11.03.2019
(51) Int. Cl.: B25J 13/00, B25J 19/06

(54) **PARAMETER IDENTIFYING DEVICE, METHOD, AND PROGRAM**

(30) Priority: 17.07.2018 JP 2018134105
(71) Applicant: OMRON Corporation, Shiokoji-dori, Shimogyo-ku, Kyoto-shi Kyoto 600-8530 (JP)
(72) Inventor: SUZUMURA, Akihiro, Kyoto 619-0283 (JP); NAKASHIMA, Akane, Kyoto 619-0283 (JP); HOSOMI, Shinichi, Kyoto 619-0283 (JP); KURATANI, Ryoichi, Kyoto 619-0283 (JP)
(74) Representative: Horn Kleimann Waitzhofer Patentanwälte PartG mbB
(86) International application number: PCT/JP2019/009815
(87) International publication number: WO 2020/017092

(57) **Abstract**

For faster identification of the parameter in a mathematical model for a robot, a trajectory generator (52) generates a trajectory of movement of a robot (16) satisfying an identification condition for the parameter to identify a parameter in a robot model (58). A data obtainer (54) obtains data representing torque generated in the robot (16) moving in accordance with the trajectory generated by the trajectory generator (52). An identifier (56) identifies the parameter in the robot model (58) based on the trajectory generated by the trajectory generator (52) and based on the data obtained by the data obtainer (54).

## Description

### FIELD

The present invention relates to a parameter identification apparatus, a parameter identification method, and a parameter identification program.

### BACKGROUND

Parameter identification in mathematical models for robots has been performed for, for example, robots, tools such as robot hands attached to the robots, and workpieces to be transported or processed with the tools.

Identifying a parameter portion of an equation of motion for a robot arm having multiple degrees of freedom may typically use a sequential identification method including determining a contributing main parameter portion for each individual link in a mathematical model for a target robot and conducting identification tests sequentially from the arm end of the robot to obtain the parameters.

For example, a sequential identification method has been developed to identify a dynamic model for a robot arm by identifying an equation of motion for a robot arm having multiple degrees of freedom. This method identifies the dynamic characteristics model for the robot arm by determining the target robot to be the set of sub-robots having two to four degrees of freedom and performing an arithmetic process using an equation of motion expressed with dynamic characteristics parameters derived beforehand for the sub-robots, thus determining intended parameters.

### CITATION LIST

### PATENT LITERATURE

Patent Literature 1: Japanese Unexamined Patent Application Publication No. 6-190754

### SUMMARY

### TECHNICAL PROBLEM

Such a known sequential identification method involves sequential testing to identify parameters in a mathematical model from the arm end of the robot. The method is simple but takes time for tests for identification, and may involve redesigning of the procedure for each robot.

In response to the above issue, one or more aspects of the present invention are directed to a parameter identification apparatus, a parameter identification method, and a parameter identification program that allow faster identification of parameters in a mathematical model for a robot.

### SOLUTION TO PROBLEM

A parameter identification apparatus according to an aspect of the present invention includes a trajectory generator that generates a trajectory of movement of a robot satisfying an identification condition for the parameter to identify a parameter in a mathematical model for the robot, a data obtainer that obtains data representing a physical quantity generated in the robot moving in accordance with the trajectory generated by the trajectory generator, and an identifier that identifies the parameter in the mathematical model based on the trajectory generated by the trajectory generator and based on the data obtained by the data obtainer.

In the parameter identification apparatus according to the above aspect of the present invention, the trajectory generator generates a trajectory satisfying an identification condition for a parameter in a mathematical model for a robot as a trajectory of movement of the robot to identify the parameter. The data obtainer obtains data representing a physical quantity generated in the robot moving in accordance with the trajectory generated by the trajectory generator. The identifier identifies the parameter in the mathematical model based on the trajectory generated by the trajectory generator and based on the data obtained by the data obtainer. This allows faster identification of the parameter in the mathematical model for the robot.

The identification condition for the parameter may be identifiability. This allows generation of a trajectory suitable for parameter identification.

In the parameter identification apparatus according to the above aspect of the present invention, the trajectory generator may generate the trajectory that allows the robot to avoid an obstacle. This allows faster identification of the parameter in the mathematical model for the robot in an environment with obstacles.

The trajectory generator may generate the trajectory with motion planning. This allows generation of a trajectory to be used for parameter identification in a more simplified manner than using non-linear optimization to derive the optimal trajectory.

The trajectory generator may receive designation of a waypoint and generate the trajectory including the waypoint. This narrows the trajectory search and thus reduces the search time. This also allows parameter identification using data obtained through more realistic movement of the robot in operation, thus improving the accuracy of parameter identification.

The parameter identification apparatus according to the above aspect of the present invention may further include a model obtainer that obtains the mathematical model by receiving an input of the mathematical model or by calculating the mathematical model based on structural information about the robot.

The model obtainer may set, as an initial estimated solution to the parameter in the mathematical model, a value based on a computer-aided design model. Thus, the trajectory generator can generate a trajectory with the set parameter serving as a constraint to narrow the search. This allows faster generation of the trajectory and thus faster identification of the parameter.

The mathematical model may be a kinetic model or a kinematic model for the robot, or a kinetic model or a kinematic model for a load on the robot. Thus, the aspect of the present invention is applicable to a variety of models and can be used for a variety of functions using the models.

The data representing the physical quantity may include torque generated in the robot, and may include at least a posture of the robot during movement. The trajectory may be sequence data of at least a posture of the robot, and the data representing the physical quantity may include torque generated in the robot. This allows parameter identification based on an equation expressed with a trajectory, a parameter in a model, and torque.

The trajectory generator may generate the trajectory with a maximum settable speed and a maximum settable acceleration. Thus, the data obtainer can obtain data for the robot moving with the maximum torque, increasing the signal-to-noise ratio and improving the accuracy of parameter identification.

A parameter identification method according to another aspect of the present invention includes generating, with a trajectory generator, a trajectory of movement of a robot satisfying an identification condition for the parameter to identify a parameter in a mathematical model for the robot, obtaining, with a data obtainer, data representing a physical quantity generated in the robot moving in accordance with the trajectory generated by the trajectory generator, and identifying, with an identifier, the parameter in the mathematical model based on the trajectory generated by the trajectory generator and based on the data obtained by the data obtainer.

A parameter identification program according to still another aspect of the present invention is a parameter identification program for causing a computer to function as a trajectory generator that generates a trajectory of movement of a robot satisfying an identification condition for the parameter to identify a parameter in a mathematical model for the robot, a data obtainer that obtains data representing a physical quantity generated in the robot moving in accordance with the trajectory generated by the trajectory generator, and an identifier that identifies the parameter in the mathematical model based on the trajectory generated by the trajectory generator and based on the data obtained by the data obtainer.

### ADVANTAGEOUS EFFECTS

The parameter identification apparatus, the parameter identification method, and the parameter identification program according to the above aspects of the present invention allow generation of a trajectory satisfying an identification condition for a parameter in a mathematical model for a robot as a trajectory of movement of the robot to identify the parameter, and allow faster identification of the parameter in the mathematical model for the robot.

### BRIEF DESCRIPTION OF THE DRAWINGS

Fig. 1 is a schematic view of a parameter identification system according to first and third embodiments.
Fig. 2 is a block diagram of a parameter identification apparatus according to the first to third embodiments showing its hardware configuration.
Fig. 3 is a diagram describing a sequential identification method.
Fig. 4 is a diagram describing a simultaneous identification method.
Fig. 5 is a diagram describing an overview of the embodiments.
Fig. 6 is a functional block diagram of the parameter identification apparatus according to the first embodiment.
Fig. 7 is a diagram describing trajectory planning in the first embodiment.
Fig. 8 is a diagram describing the trajectory planning in the first embodiment.
Fig. 9 is a diagram describing the trajectory planning in the first embodiment.
Fig. 10 is a diagram describing the trajectory planning in the first embodiment.
Fig. 11 is a diagram describing the trajectory planning in the first embodiment.
Fig. 12 is a flowchart showing an example parameter identification process in the first embodiment.
Fig. 13 is a schematic view of the parameter identification system according to the second embodiment.
Fig. 14 is a functional block diagram of the parameter identification apparatus according to the second embodiment.
Fig. 15 is a diagram describing trajectory planning in the second embodiment.
Fig. 16 is a diagram describing the trajectory planning in the second embodiment.
Fig. 17 is a flowchart showing an example parameter identification process in the second embodiment.
Fig. 18 is a functional block diagram of the parameter identification apparatus according to the third embodiment.
Fig. 19 is a diagram describing trajectory planning in the third embodiment.
Fig. 20 is a diagram describing the trajectory planning in the third embodiment.

### DETAILED DESCRIPTION

Embodiments of the present invention will now be described with reference to the drawings. The same or equivalent components and parts throughout the drawings are given the same reference numerals. The drawings may be exaggerated for ease of explanation, and may not be drawn to scale relative to the actual components.

### First Embodiment

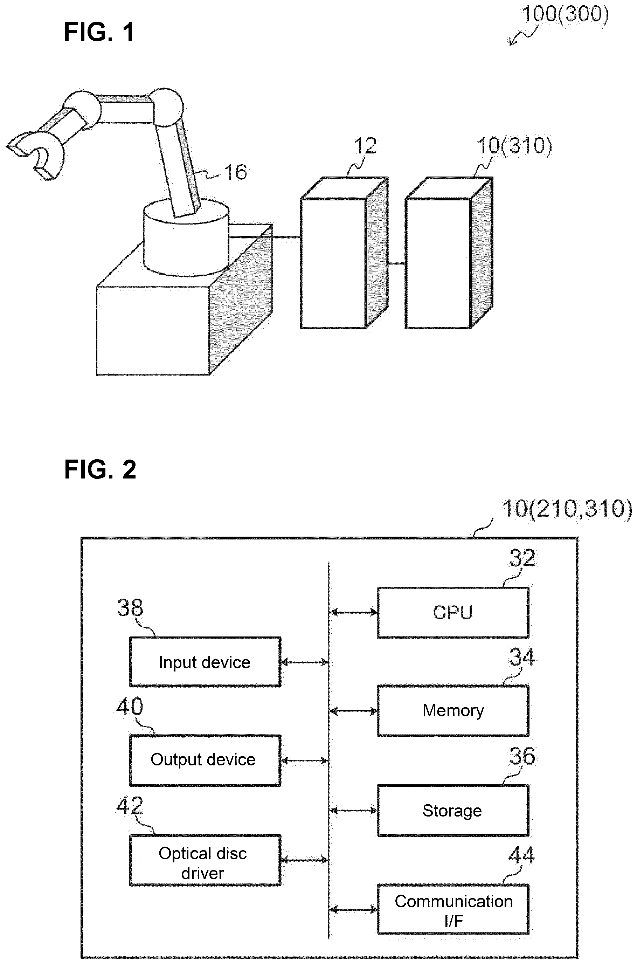

As shown in Fig. 1, a parameter identification system 100 according to a first embodiment includes a parameter identification apparatus 10, a robot controller 12, and a robot 16.

The robot 16 is, for example, a vertical articulated robot having six degrees of freedom for movement in a three-dimensional (3D) space. The robot 16 may have seven degrees of freedom including a redundant degree of freedom in addition to the six degrees of freedom. The robot 16 is controlled by the robot controller 12 to move in accordance with trajectory data generated by the parameter identification apparatus 10.

The robot controller 12 controls the movement of the robot 16 in accordance with the trajectory data generated by the parameter identification apparatus 10.

The parameter identification apparatus 10 plans a path from a designated start posture to a designated goal posture, and generates trajectory data.

In the present embodiments, the path refers to a sequence of time-series postures of the robot 16 moving its arm end (end to receive a tool such as a robot hand) having a reference point from any start point to a goal point. The posture of the robot 16 is represented by a sequence of values (J1, J2, ..., JN) of the first to Nth joints (rotational angles) of the robot 16 (where N is the number of joints of the robot), with the reference position on its arm end being at a certain position (x, y, z) and in a certain posture (roll, pitch, yaw).

In the present embodiment, the trajectory refers to the path combined with the speed and the acceleration that change the posture of the robot 16.

Fig. 2 is a block diagram of the parameter identification apparatus 10 according to the present embodiment showing its hardware configuration. As shown in Fig. 2, the parameter identification apparatus 10 includes a central processing unit (CPU) 32, a memory 34, a storage 36, an input device 38, an output device 40, an optical disc driver 42, and a communication interface (I/F) 44. The components are connected to one another with a bus in a communicable manner.

The storage 36 stores a parameter identification program for performing a parameter identification process. The CPU 32 executes various programs and controls the components. More specifically, the CPU 32 reads the programs from the storage 36 and executes the programs using the memory 34 as a work area. The CPU 32 controls the components and performs various arithmetic processes in accordance with the programs stored in the storage 36.

The memory 34 includes a random-access memory (RAM) that serves as a work area for temporarily storing programs and data. The storage 36 includes a read-only memory (ROM) and a hard disk drive (HDD) or a solid state drive (SSD). The storage 36 stores various programs including an operating system and stores various items of data.

The input device 38 includes, for example, a key board and a mouse for various input operations. The output device 40 includes, for example, a display and a printer, and outputs various items of information. The output device 40 may be a touchscreen display that can also serve as the input device 38. The optical disc driver 42 reads data stored in recording media, such as compact disc read-only memories (CD-ROMs) and Blu-ray discs, and writes data onto recording media.

The communication I/F 44 communicates with other components and uses a standard such as Ethernet (registered trademark), Fiber Distributed Data Interface (FDDI), or Wi-Fi (registered trademark).

Before the parameter identification apparatus 10 according to the first embodiment is described in detail, methods to identify parameters in mathematical models for robots and associated issues will be described, and an overview of the present embodiment will be provided.

Parameter identification methods mainly include a sequential identification method and a simultaneous identification method.

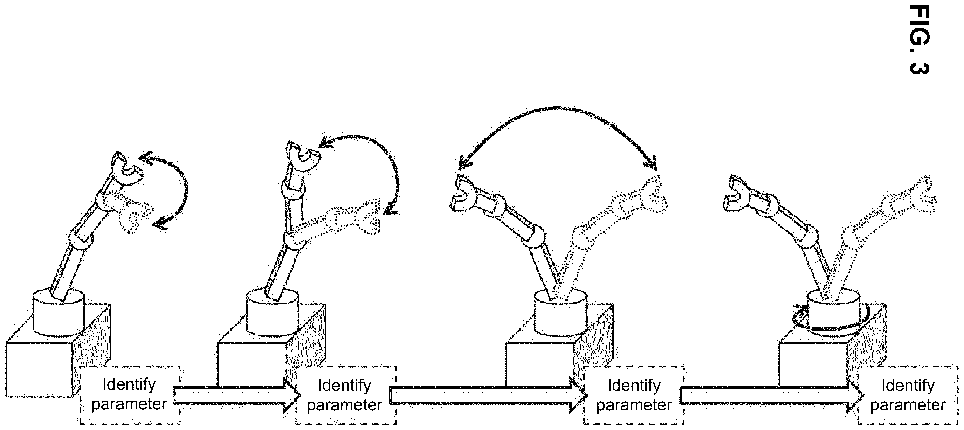

The sequential identification method sequentially identifies parameters by conducting parameter identification tests in a mathematical model sequentially from the arm end of the robot, as shown in Fig. 3. The sequential identification method includes determining a main parameter portion that contributes to each individual link of a target robot in the mathematical model for the robot, and conducting identification tests sequentially from the arm end to obtain the parameters. Thus, an identification test is designed for each individual link. The identification operation planning is thus time-consuming. An identification experiment is also conducted for each individual link. The identification experiment is time-consuming. Further, each robot involves determining the parameter portion for each individual link and thus redesigning the identification test procedure. The parameter portion is a combination of physical parameters such as mass and the center of gravity, and is thus difficult to derive commonly. The parameter portion is to be derived for each robot. Further, the value to be identified is a combination of physical parameters. Separate physical parameters such as mass and the center of gravity cannot be identified directly. With the sequential identification method, identification errors easily accumulate before a final parameter is identified using the parameters identified for each link.

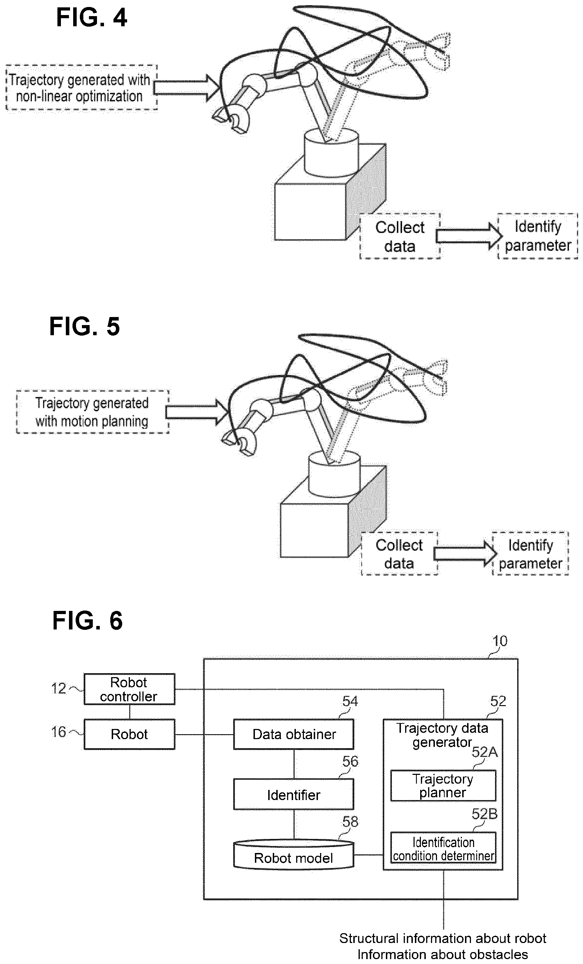

The simultaneous identification method includes deriving the equation Wβ = ω from a mathematical model for a robot. This process is theoretically established and can be performed systematically. In the equation, W is the data matrix representing trajectory data including the posture, speed, and acceleration of the robot, β is the parameter vector to be identified, and ω is the torque generated at each joint of the robot moving in the trajectory defined by the data matrix W. As shown in Fig. 4, this method includes collecting data about the posture, speed, acceleration, and torque of the robot moving in accordance with the trajectory data generated with non-linear optimization. The data about the posture, speed, and acceleration is used to form the optimal data matrix W, in which the torque data is substituted for ω. The least squares problem expressed by min | | Wβ - ω | |² is solved to identify the parameter vector β.

The simultaneous identification method, which involves a single identification test, overcomes the issue associated with the sequential identification method described above. To identify the parameter accurately, W is to be an optimal data matrix having high identifiability. Identifiability is the property for the data matrix W to allow accurate identification of the parameter. To use the optimal W for identification, an index of identifiability is calculated as an evaluation function for the data matrix W. The data matrix W having the ideal evaluation function is then derived with non-linear optimization and is selected as W^{opt}. This non-linear optimization involves a high calculation cost. In particular, W having a larger size (a larger number of data points forming the trajectory) may involve an enormous calculation cost.

The present embodiment is based on the simultaneous identification method and uses, as the data matrix W^{opt}, trajectory data reflecting identifiability and generated with motion planning, instead of trajectory data generated with non-linear optimization, as shown in Fig. 5. This allows faster generation of trajectory data for the data matrix W^{opt}, allowing faster identification of the parameter.

Motion planning typically generates trajectory data representing trajectories that can avoid obstacles around the robot. Thus, motion planning allows faster identification of the parameter in an environment with obstacles. To generate trajectory data that avoids obstacles using non-linear optimization, the surrounding environment is identified in the 3D space of the robot. Then, the area of obstacles or the area that avoids obstacles is projected in a configuration space including robot postures. The data is mathematically expressed with the area of obstacles as a constraint. These processes typically involve an enormous calculation cost, possibly disabling fast planning of the identification operation in an environment with obstacles.

The functional components of the parameter identification apparatus 10 according to the first embodiment will now be described.

Fig. 6 is a functional block diagram of the parameter identification apparatus 10. As shown in Fig. 6, the parameter identification apparatus 10 includes a trajectory data generator 52, a data obtainer 54, and an identifier 56 as the functional components. The parameter identification apparatus 10 includes a predetermined storage area storing a robot model 58 or a mathematical model for the robot. Each functional component is implemented by the CPU 32 reading the parameter identification program stored in the storage 36, expanding the program into the memory 34, and executing the program. The trajectory data generator 52 is an example trajectory data generator in an aspect of the present invention. The data obtainer 54 is an example data obtainer in an aspect of the present invention. The identifier 56 is an example identifier in an aspect of the present invention.

The trajectory data generator 52 obtains the structural information about the robot 16, including the arrangement of joints, the structure of links, the limit angles of joints, and the reference position on the arm end of the robot 16, and the information about obstacles around the robot 16. For example, the trajectory data generator 52 obtains these items of information by receiving CAD data of the robot and CAD data representing the shapes and positions of obstacles around the robot 16.

The trajectory data generator 52 uses the structural information about the robot 16, the information about obstacles, and the robot model 58 to generate trajectory data representing a trajectory of movement of the robot 16 to identify a parameter in the robot model 58 and representing a trajectory satisfying the parameter identification condition with which the robot 16 avoids obstacles.

More specifically, the trajectory data generator 52 includes a trajectory planner 52A and an identification condition determiner 52B as functional components, which generate the above trajectory data.

The trajectory planner 52A plans a path, which is a sequence of postures of the robot 16 from a designated start posture (start point) to a designated goal posture (goal point). The trajectory planner 52A may generate the path using any known motion planning method. In the first embodiment, the trajectory planner 52A uses motion planning using random sampling, such as a rapidly-exploring random tree (RRT) or a probabilistic roadmap (PRM). The trajectory planner 52A also plans a trajectory by adding, to the planned path, information indicating the speed and the acceleration that change the posture of the robot 16.

The identification condition determiner 52B calculates an index (hereafter, an identifiability index) representing the identifiability of the trajectory planned by the trajectory planner 52A, and uses the calculated identifiability index to control the trajectory planner 52A to plan a trajectory satisfying the parameter identification condition.

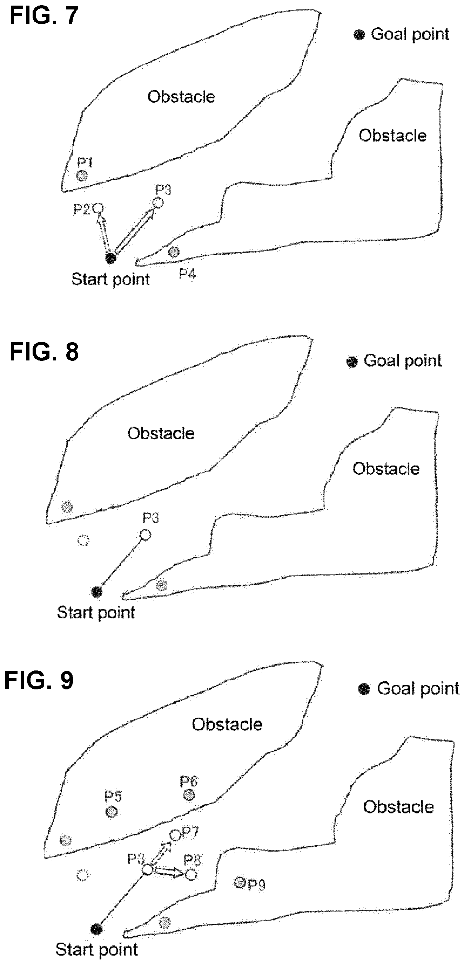

More specifically, as shown in Fig. 7, the trajectory data generator 52 causes the trajectory planner 52A to place a designated start point and a designated goal point in a configuration space including all possible postures of the robot 16. In Fig. 7, black circles indicate the start point and the goal point. The points in the configuration space represent postures (J1, J2, ..., JN) of the robot. The trajectory data generator 52 causes the trajectory planner 52A to set the start point as the first target point and randomly generates, around the target point, sample points as candidates for the next point to be connected to the target point. In the example of Fig. 7, sample points P1 to P4 are generated as candidates for the start point. The trajectory planner 52A also sets, between the target point and each sample point, the speed and the acceleration that change the posture from the posture represented by the target point to the posture represented by the corresponding sample point.

The trajectory data generator 52 causes the identification condition determiner 52B to determine, from among the sample points, the next point to be connected to the target point. More specifically, the identification condition determiner 52B excludes, from the generated sample points, sample points representing postures that cannot avoid obstacles. The avoidance of an obstacle can be determined by, for example, setting an area representing an obstacle in the configuration space based on the obtained information about the obstacle, and determining whether the path connecting the target point and each sample point passes through the area representing the obstacle. In some embodiments, the avoidance of an obstacle can be determined by converting, through forward kinematics calculation, a robot posture expressed in a configuration space into a robot posture expressed in a working space with the obstacle, simulating the robot moving through the path connecting the target point and each sample point, and determining whether the robot can avoid the obstacle. In the example of Fig. 7, sample points P1 and P4 are excluded. In Fig. 7, hatched circles indicate the excluded sample points. The same applies to the subsequent figures.

The identification condition determiner 52B calculates the identifiability index for each of the remaining sample points connected to the target point. The identifiability index, which may be a known index, is calculated using the postures represented by the sample points forming the already planned trajectory (the trajectory from the start point to the target point) and by a new sample point, and using the values of the speed and the acceleration between the postures. In some embodiments, the new sample point may be connected to the goal point to calculate the identifiability index for a provisional trajectory from the start point to the goal point. The identification condition determiner 52B determines, to be the next point to be connected to the target point, the sample point having the ideal identifiability index calculated. In the example of Fig. 7, the sample point P3 has a higher identifiability index than the sample point P2 and is thus determined to be the next point. The sample points may be determined completely randomly, or may be determined by narrowing the range of sampling using identifiability information. In some embodiments, sampling information in the past may be used to weight the sampling for areas with a higher possibility of high identifiability or areas with a lower possibility of collision with obstacles.

As shown in Fig. 8, the trajectory data generator 52 causes the trajectory planner 52A to plan a trajectory connecting the target point to the next point determined by the identification condition determiner 52B. The points may be connected with any method, such as linear interpolation or curve interpolation. In Fig. 8, broken line circles (white and hatched circles) indicate the sample points unselected as the next point. The same applies to the subsequent figures.

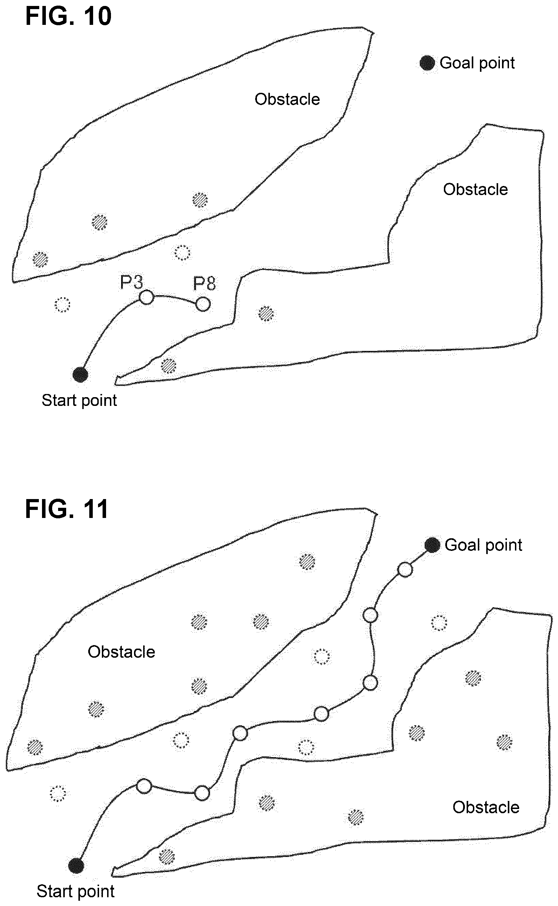

As shown in Fig. 9, the trajectory data generator 52 sets the next point as a new target point and repeats the above process. In the example of Fig. 9, the sample points P5 to P9 are generated for the sample point P3, the sample points P5, P6, and P9 that collide with obstacles are excluded, and the sample point P8 having the ideal identifiability index is determined to be the next point. As shown in Fig. 10, the trajectory data generator 52 causes the trajectory planner 52A to generate a trajectory connecting the already planned trajectory to the sample point determined to be the next point.

As shown in Fig. 11, the trajectory data generator 52 repeats the above processes until the next point reaches the goal point, thus planning a final trajectory. When the distance between the target point and the goal point is a predetermined distance or shorter, the goal point may be preferentially determined to be the next point. In the first embodiment, planning a trajectory by sequentially selecting the sample points having the ideal identifiability index as described above corresponds to planning a trajectory satisfying the parameter identification condition.

Although the start point and the goal point are different points in the present embodiment, these points may be the same point in some embodiments. In this case, the trajectory starts and extends away from the starting point (or the goal point) and then comes back to the goal point through the process using the identifiability index.

The trajectory data generator 52 generates, as trajectory data, a list of postures represented by the sample points forming the trajectory planned by the trajectory planner 52A and the speed and the acceleration set between the postures. The trajectory data generator 52 outputs the generated trajectory data to the robot controller 12.

The data obtainer 54 obtains data representing a physical quantity generated in the robot 16 moved by the robot controller 12 in accordance with the trajectory data generated by the trajectory data generator 52. More specifically, the data obtainer 54 obtains data about the postures of the robot 16 during movement, and data about the speed and the acceleration between the postures. The data obtainer 54 also obtains the torque at each joint based on, for example, the output of a motor for driving the corresponding joint of the robot 16. As the data about the postures, speed, and acceleration, the data obtainer 54 may obtain the trajectory data generated by the trajectory data generator 52. The data obtainer 54 provides the obtained data to the identifier 56.

The identifier 56 identifies the parameter in the robot model 58 based on the data obtained by the data obtainer 54. More specifically, the identifier 56 substitutes the data provided from the data obtainer 54 for the above equation W^{opt}β = ω to identify the parameter vector β with the method of least squares.

The robot model 58 may be any model including a parametric model using, for example, an equation of motion, a nonparametric model such as a Gaussian process model or a neural network model, or a semiparametric model to be a hybrid between a parametric model and a nonparametric model. In some embodiments, the robot model 58 may be a kinematic model, instead of a kinetic model of the robot 16. In some embodiments, the robot model 58 may be a mathematical model for a tool such as a robot hand attached to the arm end of the robot 16, and for a load on the robot 16 such as a workpiece held by the tool. In this case, the structural information about the load is input, in addition to the structural information about the robot 16.

Thus, one or more aspects of the present invention can identify the parameter in the mathematical model for the load on the robot 16, and thus can be used to measure the physical properties of the load. This eliminates preparing physical parameters of the load.

The operation of the parameter identification system 100 according to the first embodiment will now be described.

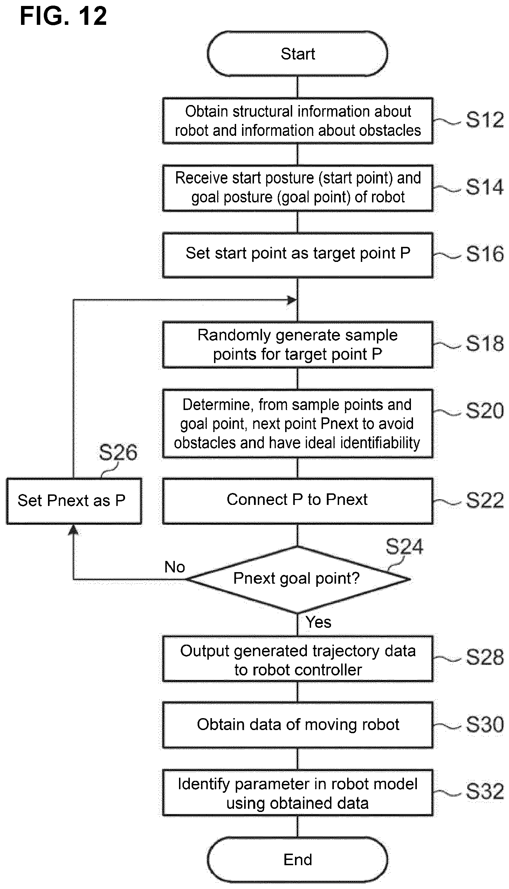

Fig. 12 is a flowchart showing the parameter identification process performed by the CPU 32 in the parameter identification apparatus 10. The CPU 32 reads the parameter identification program from the storage 36, expands the program into the memory 34, and executes the program. The CPU 32 thus serves as the functional components of the parameter identification apparatus 10 to perform the parameter identification process shown in Fig. 12.

In step S12, the trajectory data generator 52 obtains the structural information about the robot 16 and the information about obstacles.

In step S14, the trajectory data generator 52 receives a start posture and a goal posture for the trajectory to be generated. The start posture and the goal posture may be any postures designated and input to the parameter identification apparatus 10 by, for example, an operator. The trajectory planner 52A places a start point representing the start posture and a goal point representing the goal posture in a configuration space including all possible postures of the robot 16.

In step S16, the trajectory planner 52A sets the start point as a first target point P.

In step S18, the trajectory planner 52A randomly generates, around the target point P, sample points as candidates for the next point Pnext to be connected to the target point P. The trajectory planner 52A sets the speed and the acceleration between the target point P and each sample point.

In step S20, the identification condition determiner 52B excludes, from the sample points generated in step S18, the sample points representing the postures that cannot avoid obstacles. The identification condition determiner 52B then calculates the identifiability index for each of the remaining sample points and the goal point connected to the target point P. The identification condition determiner 52B determines, to be the next point Pnext, the sample point or the goal point having the ideal identifiability index calculated.

In step S22, the trajectory planner 52A plans a trajectory connecting the target point P to the point Pnext determined in step S20.

In step S24, the trajectory data generator 52 determines whether the point Pnext determined in step S20 is the goal point. When the point Pnext is not the goal point, the trajectory data generator 52 advances to step S26, sets the point Pnext as a new target point P, and then returns to step S18. When the point Pnext is the goal point, the trajectory data generator 52 advances to step S28.

In step S28, the trajectory data generator 52 generates trajectory data representing the trajectory planned by the trajectory planner 52A, and outputs the generated trajectory data to the robot controller 12.

This causes the robot controller 12 to move the robot 16 in accordance with the trajectory data generated by the trajectory data generator 52.

In step S30, the data obtainer 54 obtains data about the postures of the robot 16 during movement and about the speed and the acceleration between the postures. The data obtainer 54 also obtains the torque at each joint based on, for example, the output of a motor for driving the corresponding joint of the robot 16.

In step S32, the identifier 56 substitutes the data obtained in step S30 for the above equation W^{opt}β = ω to identify the parameter vector β with an identification method such as the method of least squares. The parameter identification process then ends.

In the parameter identification system according to the first embodiment described above, the parameter identification apparatus generates, with motion planning, trajectory data to be used to identify the parameter in the robot model with a simultaneous identification method. The trajectory data is generated to have ideal identifiability. This allows faster identification of the parameter in the mathematical model for the robot, and also allows faster planning of the identification operation. The identification of the robot parameter, which is used for fast and accurate positioning and operation planning, can thus be performed faster without burdens on the user.

Further, the parameter identification apparatus according to the first embodiment determines avoidance of obstacles while searching for a trajectory. This allows faster identification of the parameter in the mathematical model for the robot in an environment with obstacles. These advantages may be effective when, for example, the robot has already been installed in an environment with obstacles.

### Second Embodiment

A second embodiment will now be described. In a parameter identification system according to the second embodiment, the same or corresponding components and parts as those in the parameter identification system 100 according to the first embodiment are given the same reference numerals and are not described in detail.

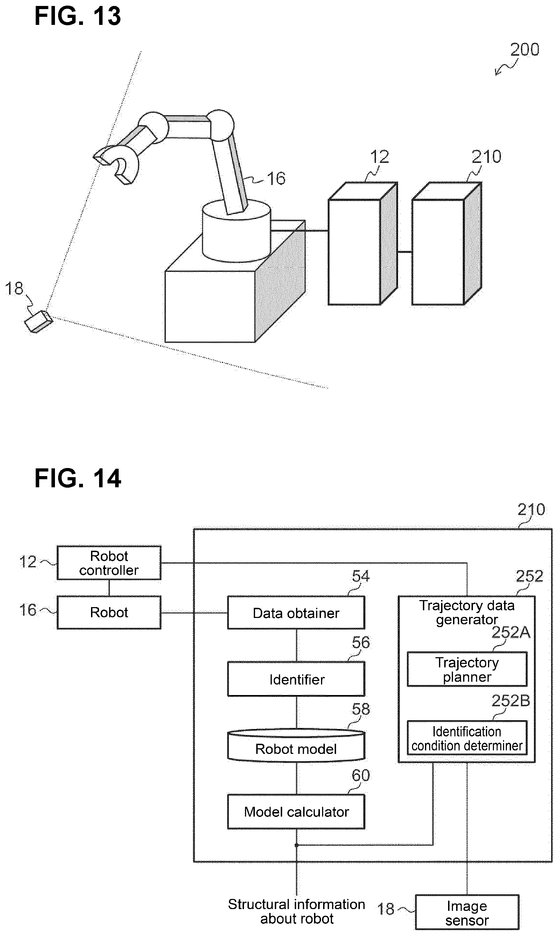

As shown in Fig. 13, a parameter identification system 200 according to the second embodiment includes a parameter identification apparatus 210, the robot controller 12, the robot 16, and an image sensor 18.

The image sensor 18 detects environmental information, such as obstacles around the robot 16, and includes a camera and an image processor. The image sensor 18 uses the camera to capture images of the area around the robot 16, and uses the image processor to calculate, from the captured images, information including the locations and the shapes of the obstacles around the robot. The image sensor 18 outputs the calculated information about the obstacles.

The sensor for detecting the information about obstacles is not limited to the image sensor 18, but may be any other sensor that can detect environmental information, such as a lidar.

The parameter identification apparatus 210 according to the second embodiment has a hardware configuration similar to that of the parameter identification apparatus 10 according to the first embodiment shown in Fig. 2, and will not be described.

The functional components of the parameter identification apparatus 210 according to the second embodiment will now be described.

Fig. 14 is a functional block diagram of the parameter identification apparatus 210. As shown in Fig. 14, the parameter identification apparatus 210 includes a trajectory data generator 252, the data obtainer 54, the identifier 56, and a model calculator 60, as the functional components. Each functional component is implemented by the CPU 32 reading the parameter identification program stored in the storage 36, expanding the program into the memory 34, and executing the program. The trajectory data generator 252 is an example trajectory data generator in an aspect of the present invention. The model calculator 60 is an example model obtainer in an aspect of the present invention.

The model calculator 60 receives the structural information about the robot 16 and uses the structural information to calculate the robot model 58. The robot model 58 may be selected from a variety of models as in the first embodiment, and the model calculator 60 may calculate the robot model 58 with a calculation method corresponding to the model used.

The trajectory data generator 252 generates trajectory data representing the trajectory satisfying the parameter identification condition that avoids obstacles, as with the trajectory data generator 52 in the first embodiment. The trajectory data generator 252 obtains the information about obstacles around the robot 16 from the image sensor 18, instead of obtaining data input beforehand, such as CAD data. Thus, the trajectory data generator 252 can obtain the information about obstacles reflecting actual circumstances.

More specifically, the trajectory data generator 252 includes a trajectory planner 252A and an identification condition determiner 252B as functional components, and causes these components to generate trajectory data.

The trajectory planner 252A uses an optimization method with motion planning, such as stochastic trajectory optimization for motion planning (STOMP) to plan paths, each of which is a sequence of postures of the robot 16 from a designated start posture (start point) to a designated goal posture (goal point). The trajectory planner 252A also plans trajectories by adding, to the planned paths, information indicating the speed and the acceleration that change the posture of the robot 16.

The identification condition determiner 252B calculates identifiability indices for multiple trajectories planned by the trajectory planner 252A, and uses the calculated identifiability indices to select a trajectory satisfying the parameter identification condition.

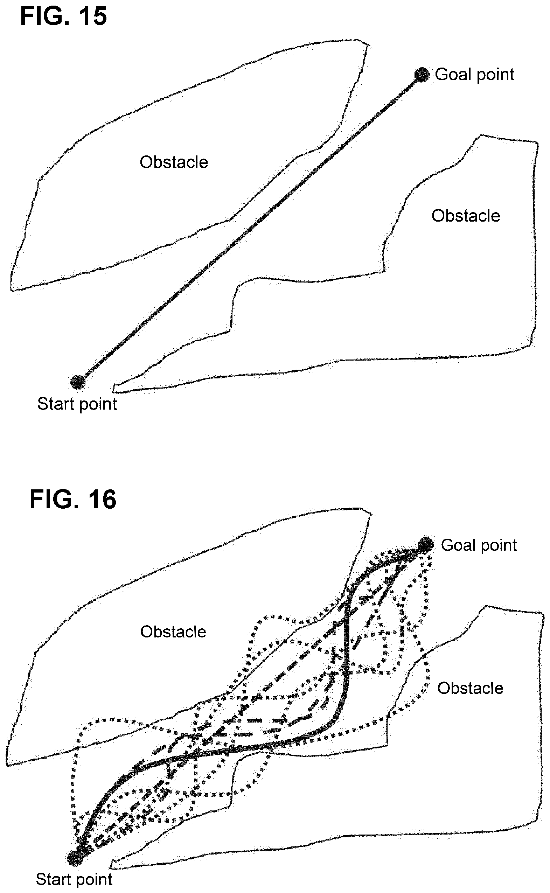

More specifically, as shown in Fig. 15, the trajectory data generator 252 causes the trajectory planner 252A to place a designated start point and a designated goal point in a configuration space including all possible postures of the robot 16. The trajectory data generator 252 then causes the trajectory planner 252A to connect the start point to the goal point. As shown in Fig. 16, the trajectory data generator 252 also causes the trajectory planner 252A to randomly plan multiple paths connecting any multiple points between the start point and the goal point. The trajectory planner 252A also plans trajectories by adding, to each of the planned paths, the speed and the acceleration of the posture change.

The trajectory data generator 252 causes the identification condition determiner 252B to exclude, from the multiple trajectories planned by the trajectory planner 252A, trajectories that cannot avoid obstacles. In the example of Fig. 16, the trajectories represented by the dotted lines are excluded.

The identification condition determiner 252B calculates the identifiability index for each of the remaining trajectories using the postures represented by the points forming the corresponding trajectory between the start point and the goal point, and using the speed and the acceleration between the postures. The identification condition determiner 252B selects the trajectory having the ideal identifiability index calculated. In the example of Fig. 16, the solid line represents the trajectory having the ideal identifiability index, and the broken lines represent the trajectories that avoid obstacles but without the ideal identifiability index. In the second embodiment, selecting the trajectory having the ideal identifiability index from among the multiple planned trajectories as described above corresponds to planning a trajectory satisfying the parameter identification condition.

The trajectory data generator 252 generates, as trajectory data, a list of postures represented by the points forming the trajectory selected by the identification condition determiner 252B and the speed and the acceleration set between the postures. The trajectory data generator 252 outputs the generated trajectory data to the robot controller 12.

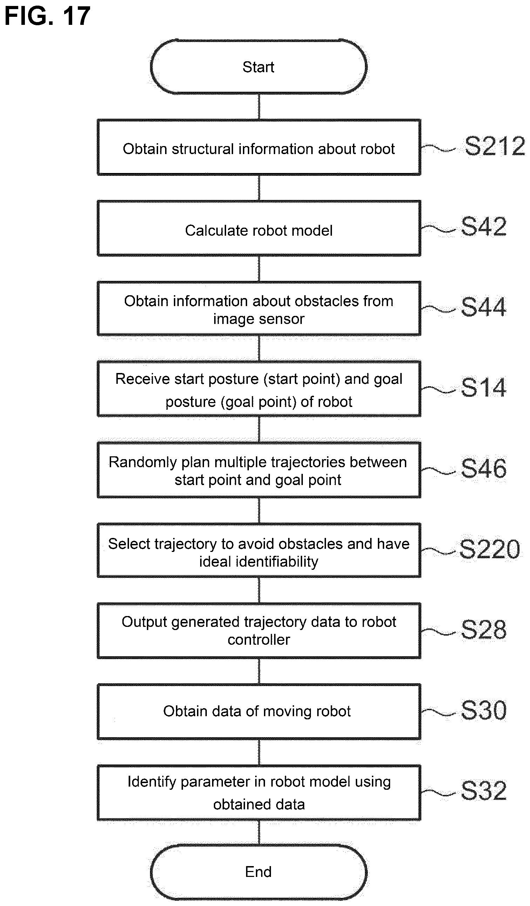

The operation of the parameter identification system 200 according to the second embodiment will now be described. In the second embodiment, the parameter identification apparatus 210 performs the parameter identification process shown in Fig. 17.

In step S212, the trajectory data generator 252 obtains the structural information about the robot 16.

In step S42, the model calculator 60 calculates the robot model 58 using the structural information about the robot 16 received in step S212.

In step S44, the trajectory data generator 252 obtains the information about obstacles around the robot 16 from the image sensor 18.

In step S14, the trajectory data generator 252 receives a start posture and a goal posture for a trajectory to be generated, and the trajectory planner 252A places a start point representing the start posture and a goal point representing the goal posture in a configuration space including all possible postures of the robot 16.

In step S46, the trajectory planner 252A randomly plans multiple paths connecting any multiple points between the start point and the goal point. The trajectory planner 252A also plans trajectories by adding, to each of the planned paths, the speed and the acceleration of the posture change.

In step S220, the identification condition determiner 252B excludes, from the multiple trajectories planned in step S46, trajectories that cannot avoid obstacles. The identification condition determiner 252B then calculates an identifiability index for each of the remaining trajectories and selects the trajectory having the ideal identifiability index.

In steps S28 to S32, the parameter identification apparatus 210 uses the trajectory data representing the selected trajectory to identify the parameter in the robot model 58 as in the first embodiment. The parameter identification process then ends.

In the parameter identification system according to the second embodiment described above, the parameter identification apparatus generates, with motion planning, trajectory data to be used to identify the parameter in the robot model with a simultaneous identification method. The trajectory data is generated to have ideal identifiability. This allows faster identification of the parameter in the mathematical model for the robot, thus allowing faster work that uses the mathematical model for the robot, such as positioning and operation planning.

Further, the parameter identification apparatus according to the second embodiment also determines avoidance of obstacles while planning trajectories. This allows faster identification of the parameter in the mathematical model for the robot in an environment with obstacles.

Further, the parameter identification apparatus according to the second embodiment obtains the information about obstacles from the image sensor to create an environment with obstacles in real time. This eliminates preparation of, for example, CAD data for equipment, and also eliminates changing and reacquiring CAD data for any change in equipment.

Although the second embodiment combines the trajectory data generator 252 with a method for obtaining the information about obstacles from the image sensor, the second embodiment may combine the trajectory data generator 52 in the first embodiment with such a method. Although the second embodiment combines the trajectory data generator 252 with a method for obtaining the information about obstacles from the image sensor, the second embodiment may combine the trajectory data generator 252 with a method for obtaining the information about obstacles from CAD data.

### Third Embodiment

A third embodiment will now be described. In a parameter identification system according to the third embodiment, the same or corresponding components and parts as those in the parameter identification system 100 according to the first embodiment are given the same reference numerals and are not described in detail.

As shown in Fig. 1, a parameter identification system 300 according to the third embodiment includes the parameter identification apparatus 10, the robot controller 12, and the robot 16.

A parameter identification apparatus 310 according to the third embodiment has a hardware configuration similar to that of the parameter identification apparatus 10 according to the first embodiment shown in Fig. 2, and will not be described.

The functional components of the parameter identification apparatus 310 according to the third embodiment will now be described.

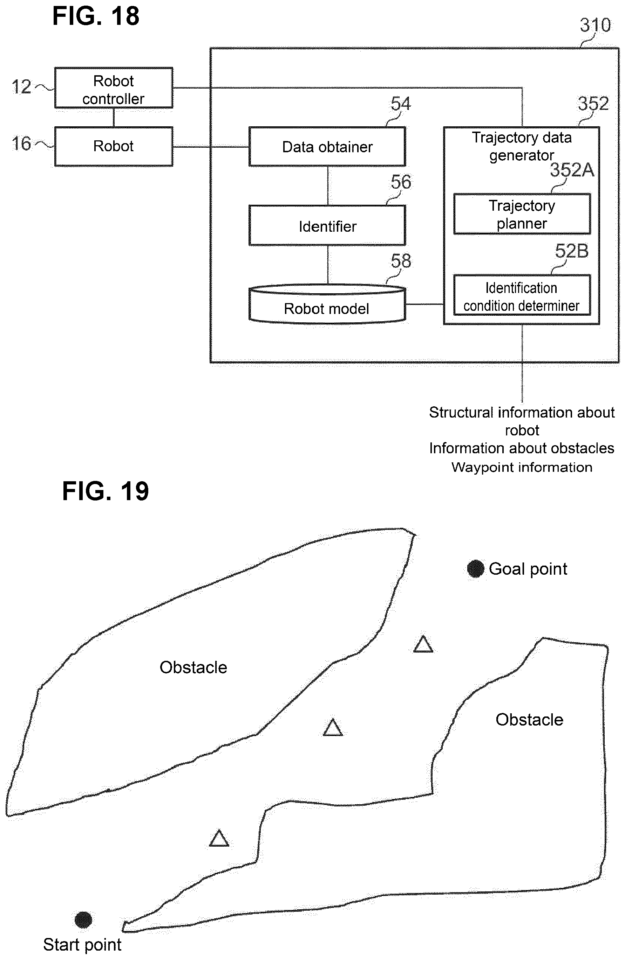

Fig. 18 is a functional block diagram of the parameter identification apparatus 310. As shown in Fig. 18, the parameter identification apparatus 310 includes a trajectory data generator 352, the data obtainer 54, and the identifier 56 as the functional components. Each functional component is implemented by the CPU 32 reading the parameter identification program stored in the storage 36, expanding the program into the memory 34, and executing the program. The trajectory data generator 352 is an example trajectory data generator in an aspect of the present invention.

The trajectory data generator 352 generates trajectory data representing the trajectory satisfying the parameter identification condition that avoids obstacles, as with the trajectory data generator 52 in the first embodiment. The trajectory data generator 352 receives designation of waypoints and generates trajectory data representing a trajectory including the waypoints or areas near the waypoints. To designate waypoints, an operator or any other user may manually input postures to be taken by the robot 16 during movement.

More specifically, the trajectory data generator 352 includes a trajectory planner 352A and an identification condition determiner 352B as functional components, and causes these components to generate trajectory data.

The trajectory planner 352A plans, using motion planning, a path including a designated start point, designated waypoints, and a designated goal point. The trajectory planner 352A then plans a trajectory by adding, to the planned path, information indicating the speed and the acceleration that change the posture of the robot 16.

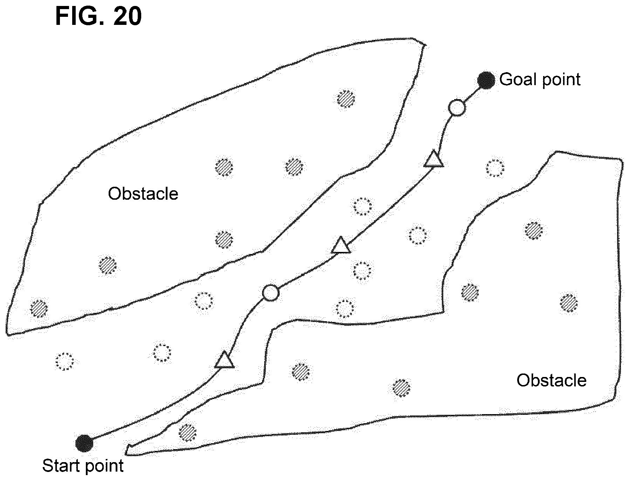

More specifically, the trajectory data generator 352 causes the trajectory planner 352A to place a designated start point, designated waypoints, and a designated goal point in a configuration space, as shown in Fig. 19. In Fig. 19, the waypoints are represented by triangles. The trajectory planner 352A randomly generates sample points around the waypoints. As in the first embodiment, the trajectory data generator 352 causes the identification condition determiner 352B to select, as the next point, the sample point that avoids obstacles and has the ideal identifiability index. The trajectory data generator 352 thus plans a trajectory. Thus, as shown in Fig. 20, a trajectory passing by (or through as in Fig. 20) the designated waypoints is generated.

The operation of the parameter identification system 300 according to the third embodiment will now be described. In the third embodiment, the parameter identification apparatus 310 performs the parameter identification process shown in Fig. 12.

The parameter identification process in the third embodiment is different from the parameter identification process in the first embodiment in that designation of waypoints is received in addition to the start point and the goal point in step S14, and in that sample points are generated near the waypoints in step S18. The other steps are similar to those in the first embodiment, and thus are not described in detail.

In the parameter identification system according to the third embodiment described above, the parameter identification apparatus generates, with motion planning, trajectory data to be used to identify the parameter in the robot model with a simultaneous identification method. The trajectory data is generated to avoid obstacles and have ideal identifiability. The trajectory data includes designated waypoints. This narrows the trajectory search and thus reduces the search time. This also allows parameter identification using data obtained through more realistic movement of the robot in operation, thus improving the accuracy of parameter identification.

In the third embodiment, the process of generating the trajectory including waypoints is applied to the configuration of the first embodiment. In some embodiments, such a process may be applied to the configuration of the second embodiment. In this case, the trajectory planner may randomly plan multiple paths connecting any multiple points between the start point and the goal point and passing through or near waypoints.

In the above embodiments, the trajectory planner and the identification condition determiner plan trajectories with a motion planning method including determination about such obstacle avoidance. In some embodiments, these components may plan trajectories with a motion planning method without reflecting such avoidance of obstacles. In this case, the parameter identification system may include a collision determiner for avoiding obstacles, separately from the trajectory planner and the identification condition determiner. For example, the parameter identification system additionally checks a planned trajectory against the information about obstacles, and repeats the trajectory planning until a trajectory that can avoid obstacles is generated, or corrects the planned trajectory to avoid the obstacles.

In one or more of the above embodiments, a value based on a CAD model for the robot may be set as an initial value of the parameter in the robot model. Thus, the trajectory data generator can generate trajectory data with the set parameter serving as a constraint to narrow the search. This allows faster generation of the trajectory data and thus faster identification of the parameter.

In one or more of the above embodiments, the speed and the acceleration of a posture change set by the trajectory data generator for a planned path to generate a trajectory may be a maximum settable speed and a maximum settable acceleration based on the structural information about the robot. This allows the robot to move with the maximum torque at each joint. Data about the actually obtained torque includes superimposed noise, with a higher torque value representing a higher signal-to-noise ratio. Data obtained from the robot moving in accordance with the trajectory with the maximum speed and acceleration is used for parameter identification to improve the identification accuracy.

Although the above embodiments describe parameter identification in a mathematical model for a vertical articulated robot, the present invention is not limited to such a vertical articulated robot and may be used for any open-loop robot. The present invention may also be used for a closed-loop robot, such as a delta robot. The present invention may also be used for a wide variety of robots, such as a free-flying mobile robot or manipulator having an unfixed base.

Although the above embodiments describe the parameter identification apparatus and the robot controller as separate apparatuses, the parameter identification apparatus may be incorporated in the robot controller. The functional components of the parameter identification apparatus may be implemented by different devices, and the parameter identification process may be implemented by distributed processing.

Although the CPU reads software (program) to perform the parameter identification process in the above embodiments, the process may be performed by processors other than the CPU. Such processors include field-programmable gate arrays (FPGAs) and other programmable logic devices (PLDs) that are reconfigurable after being manufactured, and dedicated electric circuits with circuit configurations specially designed to perform specific processing, such as application-specific integrated circuits (ASICs). The parameter identification process may be performed by one of such processors or a combination of two or more processors of the same type or different types (for example, a plurality of FPGAs or combination of a CPU and an FPGA). More specifically, the processors include, as their hardware components, electric circuits combining circuit elements such as semiconductor devices.

Although the parameter identification program is prestored (preinstalled) in the storage in the above embodiments, the storage device is not limited to such examples. The program may be stored in a recording medium such as a compact disc read-only memory (CD-ROM), a digital versatile disc read-only memory (DVD-ROM), or a universal serial bus (USB) memory device. The program may be downloaded from an external device through a network.

### REFERENCE SIGNS LIST

- 10, 210, 310: parameter identification apparatus
- 12: robot controller
- 16: robot
- 18: image sensor
- 32: CPU
- 34: memory
- 36: storage
- 38: input device
- 40: output device
- 42: optical disc driver
- 44: communication interface
- 52, 252, 352: trajectory data generator
- 52A, 252A, 352A: trajectory planner
- 52B, 252B: identification condition determiner
- 54: data obtainer
- 56: identifier
- 58: robot model
- 60: model calculator
- 100, 200, 300: parameter identification system

## Claims

1. A parameter identification apparatus, comprising:
a trajectory generator configured to generate a trajectory of movement of a robot to identify a parameter in a mathematical model for the robot, the trajectory satisfying an identification condition for the parameter;
a data obtainer configured to obtain data representing a physical quantity generated in the robot moving in accordance with the trajectory generated by the trajectory generator; and
an identifier configured to identify the parameter in the mathematical model based on the trajectory generated by the trajectory generator and based on the data obtained by the data obtainer.

2. The parameter identification apparatus according to claim 1, wherein
the identification condition for the parameter is identifiability.

3. The parameter identification apparatus according to claim 1 or claim 2, wherein
the trajectory generator generates the trajectory that allows the robot to avoid an obstacle.

4. The parameter identification apparatus according to any one of claims 1 to 3, wherein
the trajectory generator generates the trajectory with motion planning.

5. The parameter identification apparatus according to any one of claims 1 to 4, wherein
the trajectory generator receives designation of a waypoint and generates the trajectory including the waypoint.

6. The parameter identification apparatus according to any one of claims 1 to 5, further comprising:
a model obtainer configured to obtain the mathematical model by receiving an input of the mathematical model or by calculating the mathematical model based on structural information about the robot.

7. The parameter identification apparatus according to claim 6, wherein
the model obtainer sets, as an initial estimated solution to the parameter in the mathematical model, a value based on a computer-aided design model.

8. The parameter identification apparatus according to any one of claims 1 to 7, wherein
the mathematical model is a kinetic model or a kinematic model for the robot, or is a kinetic model or a kinematic model for a load on the robot.

9. The parameter identification apparatus according to any one of claims 1 to 8, wherein
the data representing the physical quantity includes torque generated in the robot, and includes at least a posture of the robot during movement.

10. The parameter identification apparatus according to any one of claims 1 to 8, wherein
the trajectory is sequence data of at least a posture of the robot, and
the data representing the physical quantity includes torque generated in the robot.

11. The parameter identification apparatus according to any one of claims 1 to 10, wherein
the trajectory generator generates the trajectory with a maximum settable speed and a maximum settable acceleration.

12. A parameter identification method, comprising:
generating, with a trajectory generator, a trajectory of movement of a robot to identify a parameter in a mathematical model for the robot, the trajectory satisfying an identification condition for the parameter;
obtaining, with a data obtainer, data representing a physical quantity generated in the robot moving in accordance with the trajectory generated by the trajectory generator; and
identifying, with an identifier, the parameter in the mathematical model based on the trajectory generated by the trajectory generator and based on the data obtained by the data obtainer.

13. A parameter identification program for causing a computer to function as
a trajectory generator configured to generate a trajectory of movement of a robot to identify a parameter in a mathematical model for the robot, the trajectory satisfying an identification condition for the parameter,
a data obtainer configured to obtain data representing a physical quantity generated in the robot moving in accordance with the trajectory generated by the trajectory generator, and
an identifier configured to identify the parameter in the mathematical model based on the trajectory generated by the trajectory generator and based on the data obtained by the data obtainer.
